# EUROPÄISCHE PATENTSCHRIFT

(11) **EP 1 600 006 B1**
(45) Veröffentlichungstag und Bekanntmachung des Hinweises auf die Patenterteilung: **20.02.2008**
(21) Anmeldenummer: 03767400.9
(22) Anmeldetag: 04.11.2003
(51) Int. Cl.: H04N 13/00

(54) **VERFAHREN UND VORRICHTUNG ZUR EINSTELLUNG EINES BILDSENSORSYSTEMS**
METHOD AND DEVICE FOR ADJUSTING AN IMAGE SENSOR SYSTEM
PROCEDE ET DISPOSITIF POUR LE REGLAGE D'UN SYSTEME DE CAPTEURS D'IMAGES

(30) Priorität: 24.01.2003 DE 10302671
(43) Veröffentlichungstag der Anmeldung: 30.11.2005
(73) Patentinhaber: ROBERT BOSCH GMBH, 70442 Stuttgart (DE)
(72) Erfinder: FRANZ, Matthias, 74074 Tuebingen (DE)
(86) Internationale Anmeldenummer: PCT/DE2003/003648
(87) Internationale Veröffentlichungsnummer: WO 2004/068864

(56) Entgegenhaltungen:
- EP-A- 0 933 646
- EP-A- 1 069 536
- EP-A- 1 081 504
- EP-A- 1 087 205
- EP-A- 1 087 336
- US-A1- 2001 036 307

## Beschreibung

### Stand der Technik

Die Erfindung betrifft ein Verfahren und eine Vorrichtung zur Einstellung wenigstens eines Parameters wenigstens eines Bildsensors eines Bildsensorsystems, wobei das Bildsensorsystem aus wenigstens zwei Bildsensoren besteht.

Bildsensorsysteme mit wenigstens zwei Bildsensoren, die im wesentlichen dieselbe Szene aufnehmen, sind bekannt. Solche Bildsensorsysteme werden auch als "Stereokamera" bezeichnet. Beispielsweise ist aus der europäischen Patentanmeldung EP 1 028 387 A2 eine Umfelderkennungseinrichtung in einem Kraftfahrzeug mit einer Stereokamera bekannt. Die Stereokamera weist zwei Bildsensoren mit überlappenden Gesichtsfeldern auf. Es wird vorgeschlagen, generierte Umfeldbilddaten der beiden Bildsensoren zur Detektion von Verkehrszeichen zu verwenden. Dem Fahrer des Kraftfahrzeuges werden die erkannten Verkehrszeichen über ein Head-up-Display angezeigt. Die Stereokamera ist damit eine Komponente eines Fahrerassistenzsystems zur Anzeige von Verkehrszeichen im Kraftfahrzeug. Fahrerassistenzsysteme sind Systeme in einem Kraftfahrzeug, die den Fahrer im Straßenverkehrs durch die Bereitstellung von Fahrerassistenzfunktionen unterstützen. Die zuverlässige Funktion der Fahrerassistenzsysteme und dessen Komponente verbunden mit einer hohen Verfügbarkeit sind die Voraussetzungen für den Einsatz dieser Systeme in einem Kraftfahrzeug. Hinweise auf ein Verfahren und eine Vorrichtung zur Erreichung einer hohen Verfügbarkeit eines Bildsensorsystems mit wenigstens zwei Bildsensoren, die im wesentlichen dieselbe Szene aufnehmen, fehlen in der EP 1 028 387 A2.

Aus der europäischen Patentanmeldung EP 0 933 646 A2 ist eine stereoskopische Bildverarbeitungseinrichtung bekannt. Die europäische Patentanmeldung EP 1 087 336 A2 offenbart eine Vorrichtung und ein Verfahren zur stereoskopischen Bildverarbeitung. Aus der europäischen Patentanmeldung EP 1 069 536 A2 ist eine Stereokameraanordnung eines Kraftfahrzeuges bekannt, wobei die Anordnung ein Ausfallentscheidungsmodul aufweist. Die europäische Patentanmeldung EP 1 081 504 A2 offenbart eine Vorrichtung zur Einstellung der Helligkeit einer Stereokamera. Aus der europäischen Patentanmeldung EP 1 087 205 A2 ist eine Vorrichtung und ein Verfahren zur Stereobildverarbeitung bekannt. Die US 2001/0036307 A1 offenbart ein Verfahren und eine Vorrichtung zur Verarbeitung von Bildern.

### Vorteile der Erfindung

Das nachfolgend beschriebene Verfahren und die Vorrichtung zur Einstellung wenigstens eines Parameters wenigstens eines Bildsensors eines Bildsensorsystems, wobei das Bildsensorsystem aus wenigstens zwei Bildsensoren besteht, die im wesentlichen dieselbe Szene aufnehmen, haben den Vorteil, dass die Fehlertoleranz des Bildsensorsystems erhöht wird. In besonders vorteilhafter Weise trägt dies allgemein zu einer hohen Verfügbarkeit des Bildsensorsystems, insbesondere der beschriebenen Stereokamera, bei. Beim Auftreten eines monokularen Fehlers, also eines Fehlers in nur einem Bildsensor des Bildsensorsystems, fällt das Bildsensorsystem nicht zwangsläufig aus. Während der Betriebsdauer tragen das Verfahren und die Vorrichtung damit zur Senkung der Ausfallzeiten und damit zur Erhöhung der Verfügbarkeit bei.

Besonders vorteilhaft ist das nachfolgend beschriebene Verfahren und die Vorrichtung in Kraftfahrzeugen. Bildsensorsysteme in Kraftfahrzeugen werden in Fahrerassistenzsystemen und/oder in sicherheitsrelevanten Systemen eingesetzt. Beispielsweise ist geplant, Bildsensorsysteme zur Erkennung von Unfallgefahren einzusetzen und abhängig von der erkannten Gefahrensituation Sicherheitseinrichtungen, wie Airbags und/oder Gurtstraffer, auf die möglich Unfallgefahr vorzubereiten. Dies ermöglicht einen gezielten und schnelleren Einsatz dieser Sicherheitseinrichtungen. Beim Einsatz von Bildsensorsystemen in solchen sicherheitsrelevanten Systemen wird deshalb eine hohe Verfügbarkeit benötigt. Das beschriebene Verfahren und die Vorrichtung tragen in besonders vorteilhafter Weise zu einer hohen Verfügbarkeit eines Bildsensorsystems in Kraftfahrzeugen bei. Vorteilhaft ist auch, dass die Verfügbarkeit des Bildsensorsystems gerade bei schwierigen Fahrsituationen, wie Regen, erhöht wird. Bei solch schwierigen Fahrsituationen ist eine besonders hohe Unfallgefahr vorhanden und es ist wichtig, dass das Bildsensorsystem eine hohe Verfügbarkeit in diesen Fahrsituationen aufweist. Aber auch beim Einsatz von Bildsensorsystemen in Fahrerassistenzsystemen tragen das nachfolgend beschriebene Verfahren und die Vorrichtung in vorteilhafter Weise zur Erhöhung der Verfügbarkeit der Fahrerassistenzfunktionen in schwierigen Fahrsituationen bei. Dies ist deshalb vorteilhaft, da viele Fahrerassistenzfunktionen gerade für den Einsatz in schwierigen Fahrsituationen konzipiert sind und dort vom Fahrer benötigt werden.

Bei der Einstellung wenigstens eines Belichtungsparameters wird in vorteilhafter Weise eine verbesserte Fehlertoleranz der Belichtungseinstellung der Bildsensoren erreicht, da beim Vorliegen eines Fehlers in wenigstens einem Bildsensor die Bildsensoren nur mit der fehlerfreien Belichtungsinformation wenigstens eines weiteren Bildsensors eingestellt werden. Besonders vorteilhaft ist, wenn als Parameter der Gain und/oder der Offset und/oder die Integrationszeit des wenigstens einen Bildsensors verwendet wird. Diese Parameter sind für eine automatische Belichtungseinstellung und die nachfolgend beschriebene Umschaltung der Belichtungseinstellung auf wenigstens einen fehlerfreien Bildsensor besonders geeignet. Unter dem Gesichtspunkt der automatischen Einstellung und/oder Regelung und/oder Steuerung der Belichtung besitzt eine Stereokamera eine besondere Eigenschaft: Der Belichtungssensor, d. h. der Bildsensorchip, auf dem beispielsweise die Belichtungsregelung beruht, ist zweimal vorhanden. Besonders vorteilhaft ist dabei, dass bei einer Stereokamera die beiden Bildsensoren im wesentlichen dieselbe Szene aufnehmen und damit die gewonnenen Belichtungsinformationen der beiden Bildsensoren im wesentlichen gleich sind. Diese Redundanz kann im Fehlerfall genutzt werden, indem nur auf Belichtungsinformationen aus dem jeweils fehlerfreien Bildsensor zurückgegriffen wird.

Ein weiterer Vorteil des nachfolgend beschriebenen Verfahrens und der Vorrichtung ist, dass als Fehlertyp wenigstens ein Bildfehler und/oder wenigstens ein Hardwarefehler erkannt wird. Es ist damit möglich, nicht nur Bildfehler zu erkennen, sondern auch Fehler in der Hardware zu detektieren. Damit trägt das Verfahren und die Vorrichtung in vorteilhafter Weise zu einer hohen Verfügbarkeit des Bildsensorsystems bei, auch wenn ein Störfall in Form wenigstens eines Hardwarefehlers in einem Bildsensor auftritt.

Besonders vorteilhaft ist eine Verarbeitungseinheit zur Erzeugung wenigstens eines Einstellsignals für wenigstens einen Parameter wenigstens eines Bildsensor eines Bildsensorsystems zur Durchführung aller oder zumindest der wesentlichen Schritte des nachfolgend beschriebenen Verfahrens. Die Vorteile eines solchen Verarbeitungseinheit sind die oben beschriebenen Vorteile des Verfahrens und der Vorrichtung zur Einstellung wenigstens eines Parameters wenigstens eines Bildsensors eines Bildsensorsystems.

Besonders vorteilhaft ist ein Computerprogramm mit Programmcode-Mitteln, um alle Schritte oder zumindest die wesentlichen Schritte des beschriebenen Verfahrens durchzuführen, wenn das Programm auf einem Computer ausgeführt wird. Die Verwendung eines Computerprogramms ermöglicht die schnelle und kostengünstige Anpassung des Verfahrens, beispielsweise durch Anpassung an unterschiedliche Bildsensortypen. Alternativ oder zusätzlich ist die einfache Aufnahme weiterer Fehlertypen möglich.

Weitere Vorteile ergeben sich aus der nachfolgenden Beschreibung von Ausführungsbeispielen mit Bezug auf die Figuren und aus den abhängigen Patentansprüchen.

### Zeichnung

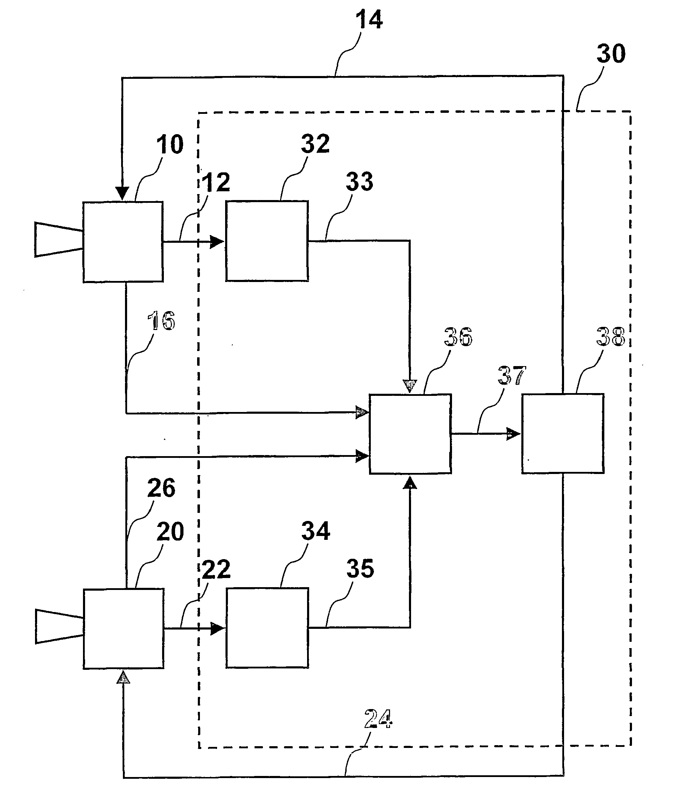

Die Erfindung wird nachstehend anhand der in der Zeichnung dargestellten Ausführungsformen näher erläutert. Die einzige Figur 1 zeigt ein Übersichtsbild des bevorzugten Ausführungsbeispiels.

### Beschreibung von Ausführungsbeispielen

Nachfolgend werden ein Verfahren und eine Vorrichtung zur Einstellung wenigstens eines Parameters eines Bildsensors einer Stereokamera in einem Kraftfahrzeug beschrieben. Die Stereokamera besteht aus zwei Bildsensoren, die im wesentlichen dieselbe Szene aufnehmen. Beim Auftreten eines Fehlers bei einem der Bildsensoren wird wenigstens ein Parameter dieses Bildsensors in Abhängigkeit wenigstens eines Messwertes des fehlerfreien Bildsensors des Bildsensorsystems eingestellt. Im bevorzugten Ausführungsbeispiel ist der Parameter wenigstens ein Belichtungsparameter des Bildsensors. Im Fehlerfall bzw. Störfall eines Bildsensors der Stereokamera wird der wenigstens eine Belichtungsparameter in Abhängigkeit wenigstens eines Messwertes des zweiten Bildsensors eingestellt, wobei der Messwert ein Maß für die Belichtung wenigstens eines Teils des Bildes des zweiten Bildsensors ist.

Figur 1 zeigt ein Übersichtsbild des bevorzugten Ausführungsbeispiels, bestehend aus einem ersten Bildsensor 10, einem zweiten Bildsensor 20 und einer Verarbeitungseinheit 30 mit verschiedenen Modulen 32, 34, 36, 38. Der erste Bildsensor 10 und der zweiten Bildsensor 20 sind so angeordnet, dass sie im wesentlichen dieselbe Szene aufnehmen. Im bevorzugten Ausführungsbeispiel bilden der erste Bildsensor 10 und der zweite Bildsensor 20 eine sogenannte Stereokamera. Bei einer Stereokamera nehmen die beiden Bildsensoren 10, 20 nicht nur im wesentlichen dieselbe Szene auf, sondern die optischen Achsen der beiden Bildsensoren 10, 20 sind zusätzlich im wesentlichen parallel. Der erste Bildsensor 10 und der zweite Bildsensor 20 sind im bevorzugten Ausführungsbeispiel im gegenseitigen horizontalem Abstand von etwa 0,2 m hinter der Windschutzscheibe im Bereichen des Innenrückspiegels eines Kraftfahrzeuges montiert. Die beiden Bildsensoren 10, 20 sind so ausgerichtet, dass ihr Bilderfassungsbereich die Umgebung des Kraftfahrzeuges in Fahrtrichtung abdeckt. In diesem Ausführungsbeispiel wird die Belichtung des Stereokamerapaares eingestellt. Beim Auftreten eines Fehlers in einem der Bildsensoren 10, 20 wird die Belichtungsinformation für beide Bildsensoren 10, 20 gemeinsam jeweils nur aus dem Bild des fehlerfreien Bildsensors 10, 20 gewonnen, während die irreführende Belichtungsinformation des gestörten Bildsensors 10, 20 unberücksichtigt bleibt. Falls beispielsweise im ersten Bildsensor 10 ein Fehler auftritt, wird die Belichtung der beiden Bildsensoren 10, 20 in Abhängigkeit der Belichtungsinformationen des zweiten Bildsensors 20 eingestellt. Hierzu findet ein automatisches Umschalten der Einstellung des Bildsensors 10, 20 auf den jeweils fehlerfreien Bildsensor 10, 20 zur Gewinnung der Belichtungsinformation statt. Dazu ist ein Mechanismus zur automatischen Detektion von Fehlerbedingungen in den beiden Bildsensoren 10, 20 vorhanden. Die Fehlerbedingungen können sowohl durch Überwachungsfunktionen der Hardware als auch durch Analyse der Bilder der Bildsensoren 10, 20 auf Bildfehler gewonnen werden. Wird in einem der Bildsensoren 10, 20 ein Fehler detektiert, so wird die Belichtungsinformation für beide Bildsensoren 10, 20 nur auf Basis des fehlerfreien Sensors gewonnen. Arbeiten beide Bildsensoren 10, 20 fehlerfrei, so werden entweder beide Bildsensoren 10, 20 individuell oder gemeinsam eingestellt. Im bevorzugten Ausführungsbeispiel werden CMOS-Bildsensoren mit logarithmischer Belichtungskennlinie verwendet, die Grauwert-Bilder mit einer Auflösung von 8 Bit erzeugen. Über die Signalleitung 12 überträgt der erste Bildsensor 10 Überwachungssignale zur Fehlerüberwachung an das Modul 32. In analoger Weise werden über die Signalleitung 22 Überwachungssignale von dem zweiten Bildsensor 20 an das Modul 34 übertragen. Als Überwachungssignale werden im bevorzugten Ausführungsbeispiel Bildsignale und verschiedene Hardwaresignale der Bildsensoren 10, 20 übertragen. In den Modulen 32, 34 zur Fehlerdetektion werden aus den über die Signalleitungen 12, 22 übertragenen Überwachungssignalen Fehler in den beiden Bildsensoren 10, 20 erkannt. Über die Signalleitung 33 überträgt das Modul 32 zur Fehlerdetektion Fehlersignale an das Modul 36 zur Bildsensorschaltung. In analoger Weise werden über die Signalleitung 35 Fehlersignale vom Modul 34 zur Fehlerdetektion an das Modul 36 zur Bildsensorschaltung übertragen. Im Modul 36 zur Bildsensorschaltung tritt je nach Vorliegen einer detektierten Fehlerbedingung in den beiden Bildsensoren 10, 20 einer von drei nachfolgend erläuterten Fällen auf. Im ersten Fall arbeiten beide Bildsensoren 10, 20 fehlerfrei und über die Signalleitungen 33, 35 werden keine Fehlersignale an das Modul 36 übertragen. Alternativ ist es möglich beide Bildsensoren 10, 20 entweder gemeinsam oder einzeln individuell einzustellen. Bei einer gemeinsamen Einstellung werden die Belichtungsinformationen aus beiden Bildsensoren 10, 20 gemittelt oder in einem gemeinsamen Grauwerthistogramm beider Bilder zusammengefasst. Die Belichtungsinformationen werden im bevorzugten Ausführungsbeispiel im Modul 38 zur Bildsensoreinstellung aus den Bildinformationen gewonnen, die von dem ersten Bildsensor 10 über die Signalleitung 16 und von dem zweiten Bildsensor 20 über die Signalleitung 26 an das Modul 36 zur Bildsensorschaltung und weiter über die Signalleitung 37 an das Modul 38 zur Bildsensoreinstellung übertragen werden. Bei der individuellen Einstellung werden die Bildsensoren 10, 20 entweder nur mit Hilfe der Belichtungsinformation einer der beiden Bildsensoren 10, 20 oder jeder Bildsensor 10, 20 wird mit den eigenen Belichtungsinformationen eingestellt. Im zweiten Fall wird in einem der beiden Bildsensoren 10, 20 ein Fehler detektiert. Dieser Fehler wird über eine Signalleitungen 33, 35 von dem entsprechenden Modul 32, 34 zur Fehlerdetektion an das Modul 36 zur Bildsensorschaltung übertragen. In diesem Fall wird im Modul 38 nur die Belichtungsinformation des fehlerfreien Bildsensors 10, 20 zur Einstellung beider Bildsensoren 10, 20 verwendet. Beispielsweise wird beim Vorliegen eines Fehlers im ersten Bildsensor 10 Bildinformationen des zweiten Bildsensors 20 über die Signalleitung 26 durch das Modul 36 zur Bildsensorschaltung weiter an das Modul 38 zur Bildsensoreinstellung übertragen. Wird in beiden Bildsensoren 10, 20 gleichzeitig ein Fehler detektiert liegt der dritte Fall vor. Handelt es sich um einen kurzzeitigen Ausreißer, so wird die momentane Belichtungsinformation vom Modul 38 zur Bildsensoreinstellung ignoriert und die Belichtungseinstellung läuft "blind" weiter. Die Einstellung wird also mit den zuletzt ermittelten Werten weitergeführt, bis normale Beleuchtungsverhältnisse auftreten und/oder bis wenigstens in einem Bildsensor 10, 20 der Fehler wegfällt und die Belichtungsinformationen wenigstens eines Bildsensors 10, 20 wieder zur Belichtungseinstellung verwendet werden können. Besteht die beidseitige Störung länger, so müssen andere Maßnahme ergriffen werden. Im bevorzugten Ausführungsbeispiel erfolgt entweder eine Warnung an den Benutzer, also den Fahrer des Kraftfahrzeuges, und/oder das System wird abgeschaltet. Im Modul 38 wird die eigentliche Belichtungseinstellung der Bildsensoren 10, 20 berechnet. Hierzu werden aus den Bildinformationen, die über die Signalleitung 37 übertragen werden, Einstellsignale erzeugt. Die Einstellsignale werden über die Signalleitung 14 an den ersten Bildsensor 10 und über die Signalleitung 24 an den zweiten Bildsensor 20 übertragen. Die Einstellsignale sind im bevorzugten Ausführungsbeispiel Signale zur Einstellung wenigstens eines Parameters der Belichtung. Als Parameter der Belichtung wird die elektrische Verstärkung (Gain) und/oder der Offset und/oder die Integrationszeit verwendet.

Im bevorzugten Ausführungsbeispiel wird die Belichtungsinformation aus der Grauwerteverteilung der übertragenen Bildinformationen bestimmt. Als Belichtungsinformation wird beispielsweise der Mittelwert der Grauwerte und/oder ein statistischer Wert, insbesondere der Median und/oder das Maximum und/oder das Minimum und/oder die Quantile, des Histogramms der Grauwerte der Bildinformationen verwendet.

Die einzelnen Module 32, 34, 36, 38 der Verarbeitungseinheit 30 sind in dem bevorzugten Ausführungsbeispiel in einem digitalen Mikroprozessor implementiert, der die beschriebenen Funktionen dieser Module 32, 34, 36, 38 als Programme, Programmteile oder Programmschritte realisiert. In einer anderen Variante sind wenigstens zwei Mikroprozessoren vorgesehen, auf welche die einzelnen Module 32, 34, 36, 38 verteilt sind. Die Übertragung der Signale auf den Signalleitungen 12, 14, 16, 22, 24, 26, 33, 35, 37 erfolgt elektrisch und/oder optisch. Alternativ oder zusätzlich ist eine Übertragung per Funk möglich. In einer weiteren Variante des bevorzugten Ausführungsbeispiels sind die beiden Bildsensoren 10, 20 und die Verarbeitungseinheit 30 zu einer Einheit zusammengefügt.

Die Module zur Fehlerdetektion für die Bildsensoren detektieren Fehler bestimmter Fehlertypen. Dabei wird zwischen zwei Fehlertypen unterschieden: Hardwarefehler und Bildfehler. Durch Detektionsschaltungen werden Ausfälle von Hardwarekomponenten der Bildsensoren erkannt. Hardwarekomponenten sind hierbei insbesondere die elektronischen Bauteile zur Umwandlung des Lichtsignals in ein elektrisches Signal, beispielsweise wenigstens ein Bildsensorchip, und/oder die Auswerteelektronik mit Mikroprozessoren und Speicher im Bildsensor. Detektionsschaltungen sind elektronische Schaltungen, die beim Auftreten eines Fehlers in einer zu überwachenden Schaltung ein Fehlersignal erzeugen. Unter den Fehlertyp Hardwarefehler fallen auch Fehler bei der Kommunikation zwischen dem Bildsensorchip und der Auswerteelektronik. Die Kommunikation ist häufig über ein Busprotokoll mit einer entsprechenden Fehlerdetektion realisiert. Ein weiterer Hardwarefehler ist der Ausfall einzelner Bitplanes. Dieser Ausfall zeigt sich typischerweise dadurch, dass ein Bit über das gesamte Bild entweder nur auf 1 oder nur auf 0 steht. Über eine entsprechende Überprüfung hinreichend vieler Bits eines Bildes wird das Vorliegen eines solchen Bitplane-Fehlers festgestellt. Der zweite Fehlertyp sind Bildfehler. Unter dem zweiten Fehlertyp Bildfehler werden insbesondere Belichtungsfehler und/oder Fehler durch Kontrastverluste und/oder stark verrauschte Bilder verstanden. Die Erkennung von Belichtungsfehlern erfolgt beispielsweise über die Auswertung des Histogramms eines Bildes. Bei einer Überbelichtung bzw. Unterbelichtung tritt eine Häufung von Grauwerten am oberen bzw. unteren Wertebereich des Histogramms auf. Kontrastverluste treten beispielsweise bei einer Verdeckung eines Bildsensors auf. Aus dem Automobilbereich sind solche monokularen Fehlerfälle bekannt. Wenn eine Stereokamera hinter der Windschutzscheibe betrieben wird und gleichzeitig der Scheibenwischer aktiv ist, dann deckt der Scheibenwischer regelmäßig immer wieder eine der beiden Bildsensoren kurzzeitig ab. Dies führt zu einer zeitweiligen, störenden Abweichung der Belichtungseinstellung der Bildsensoren. Insbesondere werden hierdurch die oben erwähnten Belichtungsfehler und/oder Kontrastverluste verursacht. Ein dynamisches Umschalten der Bildsensoreinstellung auf den jeweils unverdeckten Bildsensor trägt zur Verhinderung eines solchen unerwünschten Verhaltens bei. Stark verrauschte Bilder treten beispielsweise bei erhöhter Betriebstemperatur und/oder bei Betriebsfehler und/oder Kommunikationsfehlern des Bildsensorchips auf. Unter die Kategorie Bildfehler fallen auch Fehler durch Ausreißerbilder. Unter Ausreißerbildern werden isoliert auftretende Bildstörungen und/oder Belichtungsänderungen und/oder Verdeckungen verstanden, die jeweils nur wenige aufeinanderfolgende Bilder betreffen. Bildstörungen treten beispielsweise bei Wackelkontakten in den elektronischen Schaltungen der Bildsensoren auf, während Belichtungsänderungen beispielsweise bei kurzzeitigen Einstreuungen durch Reflektionen starker Lichtquellen auftreten. Eine Einstreuung von Reflektionen wird bei Bildsensoren in Kraftfahrzeugen beispielsweise durch Scheinwerfer anderer Kraftfahrzeuge verursacht. Verdeckungen im Bild eines Bildsensors einer Stereokamera treten in einem Kraftfahrzeug beispielsweise durch den oben erwähnten Fall des Scheibenwischers auf. Solche Ausreißbilder werden beispielsweise über prädiktive Verfahren und/oder über ermittelte Unterschiedsmaße zwischen momentanem und vergangenem Bild detektiert. Überschreitet der Unterschied zwischen momentanem und vergangenem Bild eine vorher festgelegte Schwelle, so wird das momentane Bild als Ausreißerbild gewertet. Weiterhin fallen Fehler durch unscharfe Bilder ebenfalls unter den Fehlertyp Bildfehler. Unscharfe Bilder entstehen beispielsweise durch Sichtbeeinträchtigungen der Bildsensoren durch Regen und/oder Schmutz und/oder Spritzwasser und/oder Defokussierung. Das Vorliegen eines einseitigen Fehlers in einem der Bildsensoren kann durch Vergleich zwischen dem rechten und dem linken Bild der Stereokamera verifiziert werden. Normalerweise ist der Unterschied zwischen dem rechten und dem linken Bild relativ gering. Tritt nun ein Fehler in nur einem der Bildsensoren auf, so wird im allgemeinen auch der Fehler zwischen den beiden Bildern vergrößert.

Das beschriebene Verfahren und die Vorrichtung zur Einstellung wenigstens eines Bildsensors eines Bildsensorsystems, wobei das Bildsensorsystem aus wenigstens zwei Bildsensoren besteht, die im wesentlichen dieselbe Szene aufnehmen, sind nicht auf die Einstellung wenigstens eines Belichtungsparameters beschränkt. Das beschriebenen Verfahren und die Vorrichtung ist allgemein zur Einstellung und/oder Steuerung und/oder Regelung wenigstens eines Parameters wenigstens eines Bildsensors eines Bildsensorsystems geeignet, wobei das Bildsensorsystem aus wenigstens zwei Bildsensoren besteht, die im wesentlichen dieselbe Szene aufnehmen. Neben der Einstellung wenigstens eines Belichtungsparameters ist beispielsweise die Einstellung und/oder Steuerung und/oder Regelung wenigstens eines Fokussierungsparameters möglich. Bei modernen Bildsensoren wird die Fokussierung des Bildes automatisch durch einen Autofokus eingestellt. Als Fokussierungsparameter wird beispielsweise die Brennweite der Bildsensorlinse verwendet. Alternativ oder zusätzlich werden in weiteren Varianten als Parameter wenigstens eines Bildsensors die Blende (Iris) eingestellt. Bei Bildsensoren mit Farbwiedergabe wird in einer weiteren Variante alternativ oder zusätzlich als Parameter der Weißabgleich durchgeführt. Alternativ oder zusätzlich wird in einer weiteren Variante die Belichtungsempfindlichkeit des Bildsensors eingestellt. Beispielsweise wird in einer besonderen Ausführungsform die Belichtungsempfindlichkeit des Bildsensors durch Einstellung der Knickpunkte bei einer abschnittsweise linearen Kennlinie eingestellt. In einer weiteren Variante werden wenigstens zwei unterschiedliche Parameter wenigstens eines Bildsensorsystems durch das beschriebene Verfahren und die Vorrichtung parallel eingestellt. Beim Auftreten wenigstens eines Fehlers wenigstens eines Fehlertyps bei wenigstens einem Bildsensor werden die wenigstens zwei unterschiedlichen Parameter dieses Bildsensors in Abhängigkeit wenigstens eines Messwertes wenigstens eines weiteren Bildsensors des Bildsensorsystems eingestellt.

In einer Variante des beschriebenen Verfahrens und der Vorrichtung wird ein Bildsensorsystem verwendet, das aus mehr als zwei Bildsensoren besteht, die im wesentlichen dieselbe Szene aufnehmen. Alternativ oder zusätzlich wird in einer weiteren Variante wenigstens ein Bildsensor mit linearer Kennlinie verwendet. Die eingesetzten Bildsensoren sind nicht beschränkt auf schwarz-weiß Bildsensoren. Vielmehr ist die Verwendung von Bildsensoren in unterschiedlichen Ausführungen in bezug auf die Auflösung und/oder die Farbtiefe und/oder die Charakteristik der Belichtungskennlinie möglich. Alternativ oder zusätzlich können CCD-Bildsensoren in unterschiedlichen Ausführungen in bezug auf die Auflösung und/oder die Farbtiefe und/oder die Charakteristik der Belichtungskennlinie verwendet werden. Allgemein sind das beschriebene Verfahren, die Vorrichtung, die Verarbeitungseinheit und das Computerprogramm nicht auf den Einsatz in Kraftfahrzeugen beschränkt.

## Patentansprüche

1. Verfahren zur Einstellung wenigstens eines Belichtungsparameters wenigstens eines Bildsensors (10) eines Bildsensorsystems, insbesondere in einem Kraftfahrzeug, wobei das Bildsensorsystem aus wenigstens zwei Bildsensoren (10, 20) besteht, die dieselbe Szene aufnehmen, **dadurch gekennzeichnet, dass** bei Detektion wenigstens eines Fehlers wenigstens eines Fehlertyps bei wenigstens einem Bildsensor (10) wenigstens ein Belichtungsparameter dieses Bildsensors (10) nur in Abhängigkeit wenigstens eines Messwertes wenigstens eines weiteren, fehlerfreien Bildsensors (20) des Bildsensorsystems eingestellt wird.

2. Verfahren nach Anspruch 1, **dadurch gekennzeichnet, dass** der wenigstens eine Belichtungsparameter der Gain und/oder der Offset und/oder die Integrationszeit ist.

3. Verfahren nach einem der vorhergehenden Ansprüche, **dadurch gekennzeichnet, dass** der wenigstens eine Messwert ein Maß für die Belichtung wenigstens eines Teils des Bildes des wenigstens einen weiteren Bildsensors ist.

4. Verfahren nach einem der vorhergehenden Ansprüche, **dadurch gekennzeichnet, dass** der wenigstens eine Fehlertyp wenigstens ein Bildfehler und/oder wenigstens ein Hardwarefehler ist.

5. Verarbeitungseinheit (30) zur Erzeugung wenigstens eines Einstellsignals für wenigstens einen Belichtungsparameter wenigstens eines Bildsensors (10) eines Bildsensorsystems, insbesondere in einem Kraftfahrzeug wobei der Verarbeitungseinheit (30) wenigstens zwei unterschiedliche Bilder von zwei unterschiedlichen Bildsensoren zugeleitet werden, die dieselbe Szene repräsentieren, **dadurch gekennzeichnet, dass** die Verarbeitungseinheit (30) das Auftreten wenigstens eines Fehlers wenigstens eines Fehlertyps bei wenigstens einem Bildsensor (10) des Bildsensorsystems überwacht und dass ein Modul (38) der Verarbeitungseinheit (30) beim Auftreten wenigstens eines Fehlers bei wenigstens einem Bildsensor (10) des Bildsensorsystems wenigstens ein Einstellsignal für wenigstens einen Belichtungsparameter dieses Bildsensors (10) nur in Abhängigkeit wenigstens eines Messwertes wenigstens eines weiteren, fehlerfreien Bildsensors (20) des Bildsensorsystems erzeugt.

6. Verarbeitungseinheit nach Anspruch 5, **dadurch gekennzeichnet, dass** die Verarbeitungseinheit ein Einstellsignal für den Gain und/oder den Offset und/oder die Integrationszeit erzeugt.

7. Verarbeitungseinheit nach einem der Ansprüche 5 oder 6, **dadurch gekennzeichnet, dass** die Verarbeitungseinheit das Einstellsignal in Abhängigkeit wenigstens eines Messwertes erzeugt, wobei der Messwert ein Maß für die Belichtung wenigstens eines Teils des Bildes des wenigstens einen weiteren Bildsensors ist.

8. Verarbeitungseinheit nach einem der Ansprüche 5 bis 7, **dadurch gekennzeichnet, dass** die Verarbeitungseinheit das Auftreten von wenigstens einem Bildfehler und/oder wenigstens einem Hardwarefehler als Fehlertyp überwacht.

9. Vorrichtung zur Einstellung wenigstens eines Belichtungsparameters wenigstens eines Bildsensors (10) eines Bildsensorsystems, insbesondere in einem Kraftfahrzeug, mit einem Bildsensorsystem, wobei das Bildsensorsystem aus wenigstens zwei Bildsensoren (10, 20) besteht, die dieselbe Szene aufnehmen und mit einer Verarbeitungseinheit (30) nach einem der Ansprüche 5 bis 8.

10. Vorrichtung nach Anspruch 9, **dadurch gekennzeichnet, dass** die Verarbeitungseinheit den Gain und/oder den Offset und/oder die Integrationszeit in Abhängigkeit wenigstens eines Messwertes einstellt, wobei der Messwert ein Maß für die Belichtung wenigstens eines Teils des Bildes des wenigstens einen weiteren Bildsensors ist.

11. Computerprogramm mit Programmcode-Mitteln, um alle Schritte von jedem beliebigen der Ansprüche 1 bis 4 durchzuführen, wenn das Programm auf einem Computer ausgeführt wird.

## Claims

1. Method for adjusting at least one exposure parameter of at least one image sensor (10) of an image sensor system, in particular in a motor vehicle, in which the image sensor system comprises at least two image sensors (10, 20), which record the same scene, **characterized in that**, in the case of detection of at least one error of at least one error type in at least one image sensor (10), at least one exposure parameter of this image sensor (10) is adjusted only subject to at least one measured value of at least one further, error-free, image sensor (20) of the image sensor system.

2. Method according to Claim 1, **characterized in that** the at least one exposure parameter is the gain and/or the offset and/or the integration time.

3. Method according to one of the preceding claims, **characterized in that** the at least one measured value is a measure of the exposure of at least a part of the image of the at least one further image sensor.

4. Method according to one of the preceding claims, **characterized in that** the at least one error type is at least an image error and/or at least a hardware error.

5. Processing unit (30) for the creation of at least one adjustment signal for at least one exposure parameter of at least one image sensor (10) of an image sensor system, in particular in a motor vehicle, in which the processing unit (30) is fed at least two differing images from two different image sensors, which represent the same scene, **characterized in that** the processing unit (30) monitors the occurrence of at least one error of at least one error type in at least one image sensor (10) of the image sensor system and **in that**, when at least one error in at least one image sensor (10) of the image sensor system occurs, a module (38) of the processing unit (30) creates at least one adjustment signal for at least one exposure parameter of this image sensor (10) only subject to at least one measured value of at least one further, error-free, image sensor (20) of the image sensor system.

6. Processing unit according to Claim 5, **characterized in that** the processing unit creates an adjustment signal for the gain and/or offset and/or the integration time.

7. Processing unit according to one of Claims 5 or 6, **characterized in that** the processing unit creates the adjustment signal subject to at least one measured value, in which the measured value is a measure of the exposure of at least a part of the image of the at least one further image sensor.

8. Processing unit according to one of Claims 5 to 7, **characterized in that** the processing unit monitors the occurrence of at least one image error and/or at least one hardware error as an error type.

9. Device for the adjustment of at least one exposure parameter of at least one image sensor (10) of an image sensor system, in particular in a motor vehicle, with an image sensor system, in which the image sensor system comprises at least two image sensors (10, 20), which record the same scene, and a processing unit (30) according to one of Claims 5 to 8.

10. Device according to Claim 9, **characterized in that** the processing unit adjusts the gain and/or the offset and/or the integration time subject to at least one measured value, in which the measured value is a measure of the exposure of at least a part of the image of the at least one further image sensor.

11. Computer program with program coding means, to perform all steps from any of Claims 1 to 4, if the program is executed on a computer.

## Revendications

1. Procédé de réglage d'au moins un paramètre d'éclairage d'au moins un capteur d'images (10) d'un système de capteur d'images, notamment dans un véhicule automobile, le système de capteur d'images se composant d'au moins deux capteurs d'images (10, 20) prenant la même scène,
**caractérisé en ce qu'**
à la détection d'au moins un défaut d'au moins un type de défaut pour au moins un capteur d'images (10) on règle au moins un paramètre d'éclairage de ce capteur d'images (10), seulement en fonction d'au moins une valeur de mesure d'au moins un autre capteur d'image sans défaut (20) du système de capteur d'images.

2. Procédé selon la revendication 1,
**caractérisé en ce qu'**
au moins un paramètre d'éclairage est le gain et/ ou le décalage et/ ou le temps d'intégration.

3. Procédé selon l'une des revendications précédentes,
**caractérisé en ce qu'**
au moins une valeur de mesure est une mesure de l'éclairage d'au moins une partie de l'image d'au moins un autre capteur d'images.

4. Procédé selon l'une des revendications précédentes,
**caractérisé en ce qu'**
au moins un type de défaut est au moins un défaut d'image et/ou au moins un défaut de circuit.

5. Unité de traitement (30) pour générer au moins un signal de réglage pour au moins un paramètre d'éclairage d'au moins un capteur d'images (10) d'un système de capteur d'images, notamment dans un véhicule automobile, selon lequel l'unité de traitement (30) reçoit au moins deux images différentes d'au moins deux capteurs d'images différents, représentant la même scène,
**caractérisée en ce que**
l'unité de traitement (30) surveille l'arrivée d'au moins un défaut d'au moins un type de défaut pour au moins un capteur d'images (10) du système de capteur d'images et à l'arrivée d'au moins un défaut d'au moins un capteur d'images (10) du système de capteur d'images, un module (38) de l'unité de traitement (30) génère au moins un signal de réglage pour au moins un paramètre d'éclairage de ce capteur d'images (10) seulement en fonction d'au moins une valeur de mesure d'au moins un autre capteur d'images sans défaut (20) du système de capteur d'images.

6. Unité de traitement selon la revendication 5,
**caractérisée en ce que**
l'unité de traitement génère un signal de réglage pour le gain et/ou le décalage et/ou le temps d'intégration.

7. Unité de traitement selon l'une des revendications 5 ou 6,
**caractérisée en ce que**
l'unité de traitement génère le signal de réglage en fonction d'au moins une valeur de mesure, cette valeur de mesure étant une mesure de l'éclairage d'au moins une partie de l'image d'au moins un autre capteur d'images.

8. Unité de traitement selon l'une des revendications 5 à 7,
**caractérisée en ce que**
l'unité de traitement surveille l'arrivée d'au moins un défaut d'image et/ou d'au moins un défaut de circuit comme type de défaut.

9. Dispositif de réglage d'au moins un paramètre d'éclairage d'au moins un capteur d'images (10) d'un système de capteur d'images, notamment d'un véhicule automobile comportant un système de capteur d'images, le système de capteur d'images se composant d'au moins deux capteurs d'images (10, 20) qui prennent la même scène et une unité de traitement (30) selon l'une des revendications 5 à 8.

10. Dispositif selon la revendication 9,
**caractérisé en ce que**
l'unité de traitement règle le gain et/ou le décalage et/ou le temps d'intégration en fonction d'au moins une valeur de mesure, cette valeur étant une mesure de l'éclairage d'au moins une partie de l'image d'au moins un autre capteur d'images.

11. Programme d'ordinateur avec des moyens de codes de programmes pour exécuter toutes les étapes de l'une quelconque des revendications 1 à 4, lorsque le programme est exécuté sur un ordinateur.
